# EUROPEAN PATENT APPLICATION

(11) **EP 3 780 794 A1**
(43) Date of publication of application: **17.02.2021**
(21) Application number: 18912036.3
(22) Date of filing: 29.03.2018
(51) Int. Cl.: H04W 72/04, H04W 16/14, H04W 72/12

(54) **TRANSMISSION APPARATUS AND RECEPTION APPARATUS**

(71) Applicant: NTT DOCOMO, INC., Chiyoda-ku, Tokyo 100-6150 (JP)
(72) Inventor: MURAYAMA, Daisuke, Tokyo 100-6150 (JP); HARADA, Hiroki, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2018/013273
(87) International publication number: WO 2019/186904

(57) **Abstract**

An avoidance rate of data collision in an LAA system is improved. A transmission apparatus includes: a transmission section that transmits a transmission request signal for requesting transmission of data in a second frequency band different from a first frequency band prior to transmission of the data in the first frequency band; a reception section that receives a response signal for the transmission request signal; and a control section that controls the transmission of the data based on the response signal.

## Description

### Technical Field

The present invention relates to a transmission apparatus and a reception apparatus of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and a higher speed than those of LTE, LTE successor systems (also referred to as, for example, LTE-Advanced (LTE-A), Future Radio Access (FRA), 4G, 5G, 5G+ (plus), New RAT (NR), 3^{rd} Generation Partnership Project (3GPP) and LTE Rel. 14, 15 and 16∼) are also studied.

Legacy LTE systems (e.g., Rel. 8 to 12) have been specified assuming that exclusive operations are performed in frequency bands (also referred to as, for example, licensed bands, licensed carriers or licensed Component Carriers (CCs)) licensed to telecommunications carriers (operators). For example, 800 MHz, 1.7 GHz and 2 GHz are used as the licensed CCs.

Furthermore, to expand a frequency band, the legacy LTE system (e.g., Rel. 13) supports use of a different frequency band (also referred to as an unlicensed band, an unlicensed carrier or an unlicensed CC) from the above licensed bands. A 2.4 GHz band and a 5 GHz band at which, for example, Wi-Fi (registered trademark) and Bluetooth (registered trademark) can be used are assumed as the unlicensed bands.

More specifically, Rel. 13 supports Carrier Aggregation (CA) that aggregates a carrier (CC) of a licensed band and a carrier (CC) of an unlicensed band. Thus, communication that is performed by using an unlicensed band together with a licensed band will be referred to as License-Assisted Access (LAA).

Use of LAA is studied for future radio communication systems (e.g., 5G, 5G+, NR and Rel. 15 and subsequent releases). In the future, Dual Connectivity (DC) of a licensed band and an unlicensed band, and Stand-Alone (SA) of an unlicensed band are also likely to become targets for which LAA will be studied.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

According to LAA of the legacy LTE system (e.g., Rel. 13), before transmitting data in an unlicensed band, a transmission apparatus (e.g., a radio base station that transmits downlink data and/or a user terminal that transmits uplink data) performs listening (also referred to as, for example, LBT: Listen Before Talk, CCA: Clear Channel Assessment, carrier sense or a channel access procedure) for confirming whether or not another apparatus (e.g., a radio base station, a user terminal or a Wi-Fi apparatus) performs transmission.

The transmission apparatus starts data transmission a given duration after (immediately after or a backoff duration after) detecting by the listening that another apparatus does not perform transmission (idle state). However, even when the transmission apparatus transmits the data based on a result of the listening, there is a risk that it is not possible to avoid data collision in a reception apparatus (e.g., a user terminal that receives the downlink data and/or a radio base station that receives the uplink data).

The present invention has been made in light of this point, and one of objects of the present invention is to provide a transmission apparatus and a reception apparatus that can improve an avoidance rate of data collision in a future LAA system.

### Solution to Problem

One aspect of a transmission apparatus according to the present invention includes: a transmission section that transmits a transmission request signal for requesting transmission of data in a second frequency band different from a first frequency band prior to transmission of the data in the first frequency band; a reception section that receives a response signal for the transmission request signal; and a control section that controls the transmission of the data based on the response signal.

One aspect of a reception apparatus according to the present invention includes: a reception section that receives a transmission request signal for requesting transmission of data in a second frequency band different from a first frequency band prior to transmission of the data in the first frequency band; and a transmission section that, when the transmission request signal is normally received in the second frequency band and an idle state is detected during listening of the first frequency band, transmits a response signal for the transmission request signal in the second frequency band.

### Advantageous Effects of Invention

According to the present invention, it is possible to improve an avoidance rate of data collision in a future LAA system.

### Brief Description of Drawings

Fig. 1 is a diagram illustrating one example of data collision between hidden terminals.
Fig. 2 is a diagram illustrating one example of CSMA/CA with an RTS/CTS.
Fig. 3 is a diagram illustrating one example of the RTS/CTS of a future LAA system.
Fig. 4 is a diagram illustrating one example of the RTS/CTS of the future LAA system.
Fig. 5 is a diagram illustrating one example of collision control of downlink data according to a first aspect.
Fig. 6 is a diagram illustrating another example of collision control of the downlink data according to the first aspect.
Figs. 7A and 7B are diagrams illustrating one example of formats of an RTS substitute signal and an RTS substitute signal according to the first aspect.
Fig. 8 is a diagram illustrating one example of a schematic configuration of a radio communication system according to the present embodiment.
Fig. 9 is a diagram illustrating one example of a function configuration of a radio base station according to the present embodiment.
Fig. 10 is a diagram illustrating one example of a function configuration of a baseband signal processing section of the radio base station.
Fig. 11 is a diagram illustrating one example of a function configuration of a user terminal according to the present embodiment.
Fig. 12 is a diagram illustrating one example of a function configuration of a baseband signal processing section of the user terminal.
Fig. 13 is a diagram illustrating one example of hardware configurations of the radio base station and the user terminal according to the one embodiment of the present invention.

### Description of Embodiments

A plurality of systems such as a Wi-Fi system and a system (LAA system) that supports LAA are assumed to coexist in unlicensed bands (e.g., a 2.4 GHz band and a 5 GHz band). Therefore, it is supposed that it is necessary to avoid collision of transmission and/or control an interference between a plurality of these systems.

For example, the Wi-Fi system that uses the unlicensed band adopts Carrier Sense Multiple Access (CSMA)/Collision Avoidance (CA) for a purpose of collision avoidance and/or interference control. According to CSMA/CA, a given time (DIFS: Distributed access Inter Frame Space) is provided before transmission, and a transmission apparatus confirms (carrier-senses) that there is not another transmission signal, and then transmits data. Furthermore, after transmitting the data, the transmission apparatus waits for ACKnowledgement (ACK) from a reception apparatus. When the transmission apparatus cannot receive the ACK within the given time, the transmission apparatus decides that collision has occurred, and retransmits the data.

Furthermore, for the purpose of collision avoidance and/or interference control, the Wi-Fi system adopts an RTS/CTS for transmitting a transmission request (RTS: Request to Send) before transmission, and making a response as Clear To Send (CTS) when the reception apparatus can perform reception. For example, the RTS/CTS are effective to avoid data collision between hidden terminals.

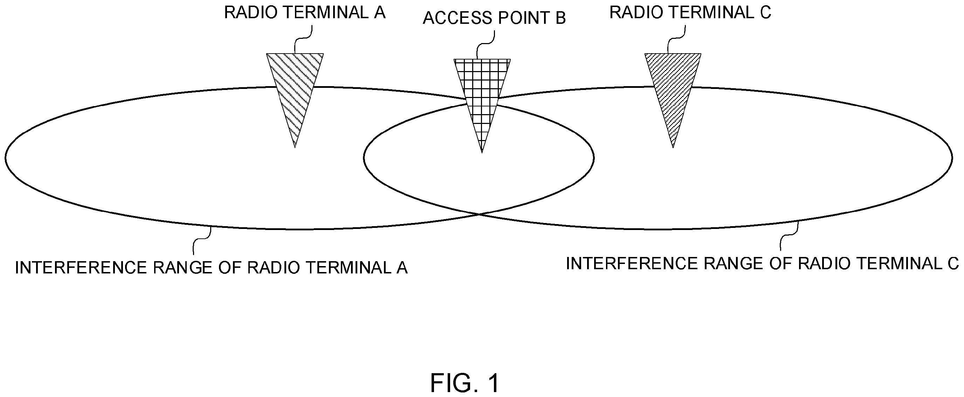

Fig. 1 is a diagram illustrating one example of data collision between hidden terminals. In Fig. 1, a radio wave of a radio terminal C does not reach a radio terminal A, and therefore even if the radio terminal A performs carrier sensing before transmission, the radio terminal A cannot detect a transmission signal from the radio terminal C. As a result, it is assumed that, even while the radio terminal C is transmitting the transmission signal to an access point B, the radio terminal A also transmits a transmission signal to the access point B. In this case, there is a risk that the transmission signals from the radio terminals A and C collide at the access point B, and a throughput lowers.

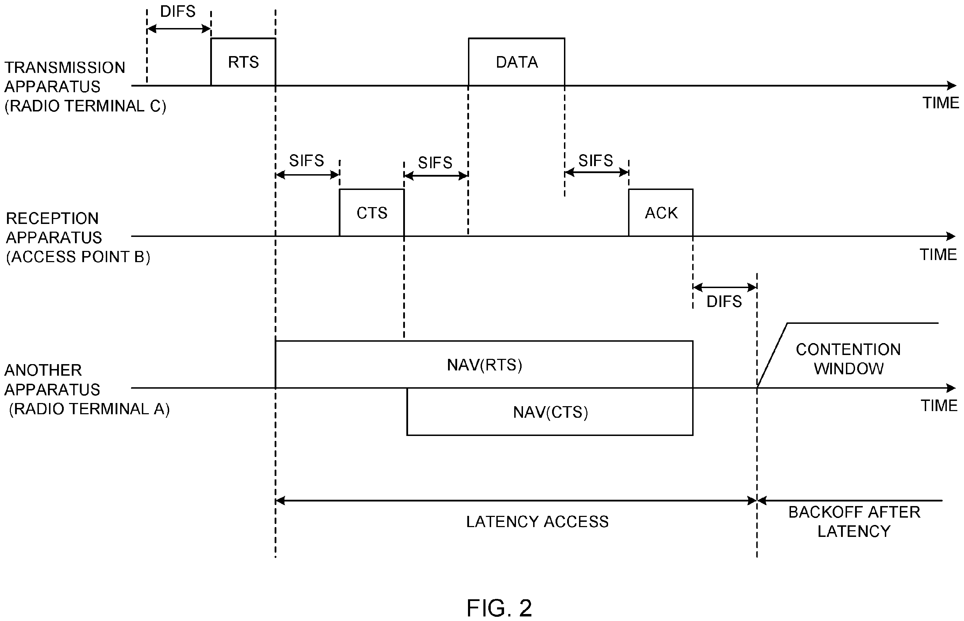

Fig. 2 is a diagram illustrating one example of CSMA/CA with an RTS/CTS. As illustrated in Fig. 2, when confirming that there is not another transmission signal in a given time (DIFS) before transmission, the radio terminal C (transmission side) transmits an RTS (in this regard, the RTS does not reach the radio terminal A (another terminal) in Fig. 1). When receiving the RTS from the radio terminal C, the access point B (reception side) transmits CTS after the given time (SIFS: Short Inter Frame Space).

In Fig. 2, the CTS from the access point B reaches the radio terminal A (another apparatus), too, and therefore the radio terminal A senses that communication is performed, and postpones transmission. A given duration (also referred to as, for example, an NAV: Network Allocation Vector or a transmission forbidden duration) is indicated in an RTS/CTS packet, and therefore communication is suspended during the given duration.

When confirming that there is not another transmission signal in the given duration (SIFS) before transmission, the radio terminal C that has received the CTS from the access point B transmits data (frame) after the given duration (SIFS). The access point B that has received the data transmits ACK after the given duration (SIFS).

In Fig. 2, when detecting the CTS from the access point B, the radio terminal A that is the hidden terminal for the radio terminal C postpones transmission, so that it is possible to avoid collision of the transmission signals of the radio terminals A and C at the access point B.

By the way, according to LAA of a legacy LTE system (e.g., Rel. 13), before transmitting data in an unlicensed band, a transmission apparatus (e.g., a radio base station that transmits downlink data and/or a user terminal that transmits uplink data) performs listening (also referred to as, for example, LBT, CCA, carrier sense or a channel access procedure) for confirming whether or not another apparatus (e.g., a radio base station, a user terminal or a Wi-Fi apparatus) performs transmission.

The transmission apparatus starts data transmission a given duration after (immediately after or a backoff duration after) detecting by the listening that another apparatus does not perform transmission (idle state). However, even when the transmission apparatus transmits the data based on a result of the listening, there are the above hidden terminals and, as a result, there is a risk that it is not possible to avoid data collision in a reception apparatus (e.g., a user terminal that receives the downlink data and/or a radio base station that receives the uplink data).

Hence, it is studied for a future LAA system (also referred to as, for example, Rel. 15 and subsequent releases, 5G, 5G+ or NR) to support the above-described RTS/CTS to improve an avoidance rate of date collision in a reception apparatus.

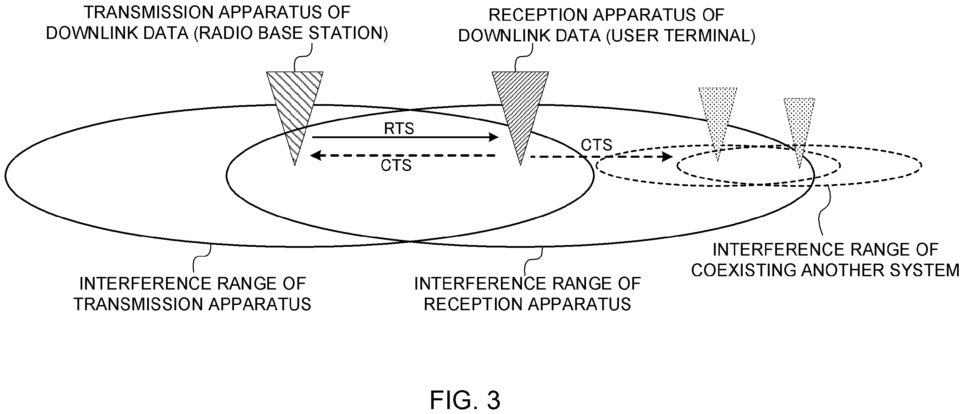

Fig. 3 is a diagram illustrating one example of an RTS/CTS in the future LAA system. As illustrated in Fig. 3, the future LAA system that supports the RTS/CTS assumes that, before transmitting downlink data to a reception apparatus (user terminal), a transmission apparatus (radio base station) transmits an RTS in a carrier of an unlicensed band (also referred to as, for example, an unlicensed carrier, an unlicensed CC or an LAA Secondary Cell (SCell)).

On the other hand, it is also assumed that the future LAA system does not support an uplink unlicensed CC. In a case where the uplink unlicensed CC is not supported, there is a risk that a reception apparatus (user terminal) of downlink data cannot transmit CTS, and cannot support the above-described RTS/CTS. Furthermore, there is a risk that a transmission apparatus (user terminal) of uplink data cannot transmit an RTS, and cannot support the RTS/CTS likewise.

Furthermore, in a case where the future LAA system supports the uplink unlicensed CC, if the reception apparatus (user terminal) of the downlink data transmits the CTS by using the uplink unlicensed CC as illustrated in Fig. 3, there is a risk that the CTS causes an unnecessary interference against another apparatus (e.g., another apparatus in the LAA system or an apparatus of coexisting another system (e.g., Wi-Fi system)).

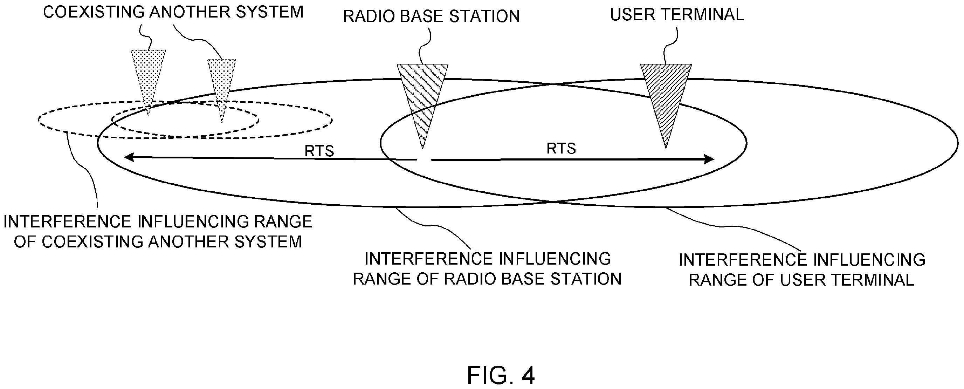

Furthermore, when a radio base station transmits an RTS by using an unlicensed CC as illustrated in Fig. 4, there is a risk that the radio base station causes an unnecessary interference against another apparatus similar to a case of the above-described CTS.

Hence, the inventors of the present invention have conceived realizing collision control corresponding to the above RTS/CTS in the above future LAA system while reducing an interference caused by RTS transmission by transmitting a signal corresponding to at least the RTS of the above RTS and CTS in a licensed CC instead of an unlicensed CC.

The present embodiment will be described in detail below with reference to the accompanying drawings. In the present embodiment, the unlicensed CC may be read as, for example, a carrier (a cell or a CC) of a first frequency band, a carrier (a cell or a CC) of the unlicensed band or an LAA SCell. Furthermore, the licensed CC may be read as, for example, a carrier (a cell or a CC) of a second frequency band, a carrier (a cell or a CC) of the licensed band, a Primary Cell (PCell) or an SCell.

### (First Aspect)

The first aspect will describe collision control during downlink data transmission. According to the first aspect, a transmission apparatus is a radio base station (e.g., a gNB: gNodeB, a Transmission/Reception Point (TRP) or a transmission point), and a reception apparatus is a user terminal (e.g., UE: User Equipment).

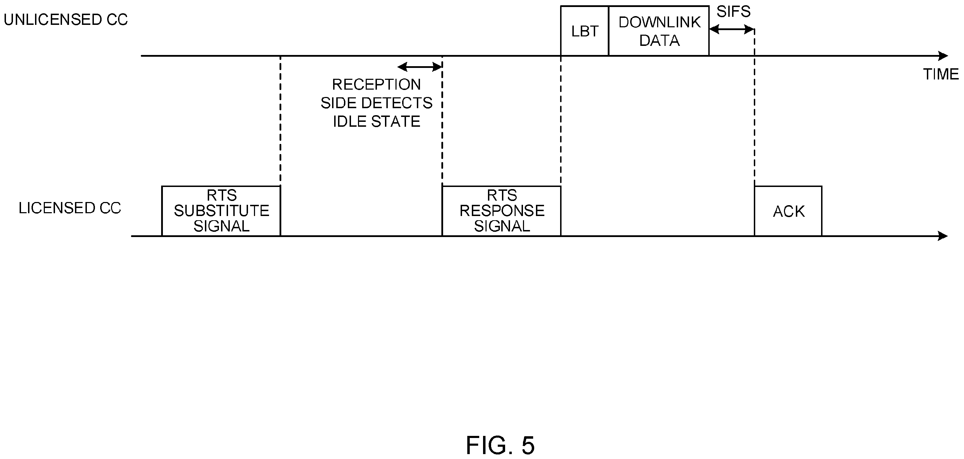

Fig. 5 is a diagram illustrating one example of collision control of downlink data according to the first aspect. A case where a radio base station transmits downlink data to a user terminal by using a carrier of a licensed band (also referred to as, for example, a licensed CC or an LAA PCell: LAA Primary Cell) will be described as one example with reference to Fig. 5.

As illustrated in Fig. 5, the radio base station transmits a signal (transmission request signal) that substitutes an RTS (Fig. 2) in a licensed CC prior to data transmission. An RTS substitute signal may be referred to as a signal for requesting transmission of a downlink signal (data), a signal (transmission notification signal) for giving notification of transmission of the downlink signal or a signal for inquiring whether or not the downlink signal can be received.

The RTS substitute signal (a frame for the RTS substitute signal) may be transmitted by using a downlink control channel (e.g., PDCCH: Physical Downlink Control Channel), a downlink shared channel (e.g., PDSCH: Physical Downlink Shared Channel) or a broadcast channel (PBCH: Physical Broadcast Channel). The PDSCH is dynamically scheduled by Downlink Control Information (DCI).

The RTS substitute signal may be configured to giving notification of a frequency band used for an unlicensed band, and an address ID. When the frequency band of the unlicensed band is notified, the user terminal can receive downlink data by using the unlicensed CC of the notified frequency band. For example, a Radio Network Temporary Indicator (RNTI) may be used as the address ID.

The RTS substitute signal may be configured to be transmitted only to a data destination apparatus, or may be configured to be transmitted (omni-transmission) to an entire cell of a licensed CC (all apparatuses that can perform transmission in the frequency band to be used). When omni-transmission is performed, the RTS substitute signal may be broadcast by using the PBCH. Alternatively, when the RTS substitute signal is transmitted on the PDSCH, the PDCCH may be controlled such that the RTS substitute signal is addressed and transmitted to one or a plurality of user terminals.

Furthermore, beam forming may be applied to transmit the RTS substitute signal. The RTS substitute signal may be subjected to Beam Forming (BF) in a given direction, and transmitted. For example, the RTS substitute signal may be addressed and transmitted to one or a plurality of user terminals by using one beam, or may be addressed and transmitted to one or a plurality of user terminals by using a plurality of beams.

A destination address of the RTS substitute signal may be an identifier of a group (a group number or a UE group number) including one or more user terminals, or may be identifiers of a plurality of user terminals (e.g., a plurality of UE numbers or a plurality of UE IDs). An address field (e.g., RA: Receiver Address) of an RTS transmitted from the radio base station may indicate a group number including a plurality of user terminals, or may indicate an ID of each user terminal.

The RTS substitute signal may be an RTS of a Wi-Fi system (Fig. 2) or a signal that complies with IEEE802.11 or may be a signal that is unique to an LAA system.

A transmission timing of the RTS substitute signal may be notified immediately before transmission (substantially together with the RTS of Wi-Fi) or in advance. Although, when the transmission timing is notified in advance, it is considered to use one of a licensed CC and an unlicensed CC, it is preferable to use the licensed CC. By giving notification of the timing of the RTS substitute signal in the licensed band, it is possible to use the unlicensed band only for transmission of downlink data. That is, another communication apparatus can use the unlicensed CC during a time that is not used for transmission of the downlink data, and improve frequency use efficiency.

When the timing is notified, a transmission start scheduled time (time window) may be notified. Furthermore, to give notification of the timing, an RRC signaling (higher layer signaling) may be used or DCI may be used.

In the licensed CC, when the user terminal normally receives the RTS substitute signal addressed to the own terminal, and immediately after the RTS substitute signal is received, after a predetermined time passes after reception of the RTS substitute signal, or after the time indicated by the RTS substitute signal passes, the user terminal performs listening (carrier sensing). In a case of an idle state, the user terminal transmits a response signal (RTS response signal) for the RTS substitute signal by using the licensed CC. The given duration will be also referred to as, for example, an LBT duration, a listening duration or a carrier sensing duration, and may be shorter than a DIFS. In addition, the carrier sensing may be performed after the RTS substitute signal addressed to the own terminal is normally received.

The RTS response signal is a signal that substitutes the above CTS (Fig. 2). The RTS response signal may be referred to as a signal (transmission permission signal) for permitting transmission of downlink data, or a signal (clear-to-send signal) for giving notification that the downlink data can be received.

The RTS response signal (a frame for the RTS response signal) may be transmitted by using an uplink control channel (e.g., PUCCH: Physical Uplink Control Channel) or an uplink shared channel (e.g., PUSCH: Physical Uplink Shared Channel). The PUSCH may be a PUSCH that is dynamically scheduled by Downlink Control Information (DCI or a UL grant), or a PUSCH (grant-free PUSCH) that is semi-statically configured by a higher layer signaling (e.g., RRC signaling) without scheduling using the UL grant.

When receiving the RTS response signal in the licensed CC, the radio base station performs the LBT operation, and, when detecting the idle state, the radio base station transmits downlink data in a carrier of the unlicensed band (also referred to as, for example, an unlicensed CC or an LAA SCell: LAA Secondary Cell). The downlink data (the frame for the downlink data) may be transmitted by using a downlink shared channel (e.g., PDSCH: Physical Downlink Shared Channel).

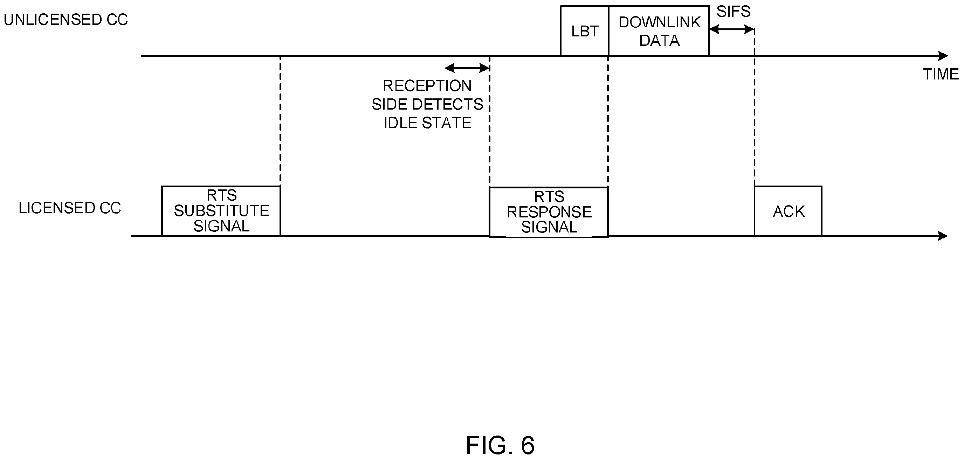

Furthermore, as illustrated in, for example, Fig. 6, by defining in advance a time from transmission of scheduling information or the RTS substitute signal to transmission of the RTS response signal, the radio base station may grasp a reception completion timing of the RTS response signal in advance, and start the LBT operation in advance such that it is possible to start transmitting data at this reception completion timing.

When addressing and transmitting downlink data to a plurality of user terminals, the radio base station may multiplex and transmit the data. For example, the data for a plurality of reception apparatuses may be multiplexed in at least one of a time domain (TDM: Time Division Multiplexing), a frequency domain (FDM: Frequency Division Multiplexing), a spatial domain (SDM: Space Division Multiplexing) and a power domain (MUST: Multiuser Superposition Transmission or NOMA: Non-Orthogonal Multiple Access).

When succeeding in decoding the downlink data transmitted in the unlicensed CC, the user terminal may transmit ACK by using the licensed CC after the given duration (SIFS).

When the user terminal transmits the RTS response signal by using the licensed CC as illustrated in Fig. 5, the radio base station can confirm that there is not a hidden terminal (e.g., another radio base station that transmits downlink data to the user terminal or another system that causes a radio interference).

Consequently, in Fig. 5, even in a case where uplink transmission in the unlicensed CC is not supported, it is possible to increase an avoidance rate of signal collision (e.g., collision of downlink signals from a plurality of radio base stations) in the user terminal. Furthermore, in Fig. 5, in the case where uplink transmission in the unlicensed CC is supported, it is possible to eliminate the interference (Fig. 3) caused by CTS transmission from the user terminal in the unlicensed CC, so that it is possible to improve space use efficiency in the unlicensed CC. Furthermore, it is possible to eliminate the interference (Fig. 4) caused by RTS transmission (transmission of a signal that is not data) from the radio base station in the unlicensed CC. Consequently, it is possible to further improve the space use efficiency.

### <Format>

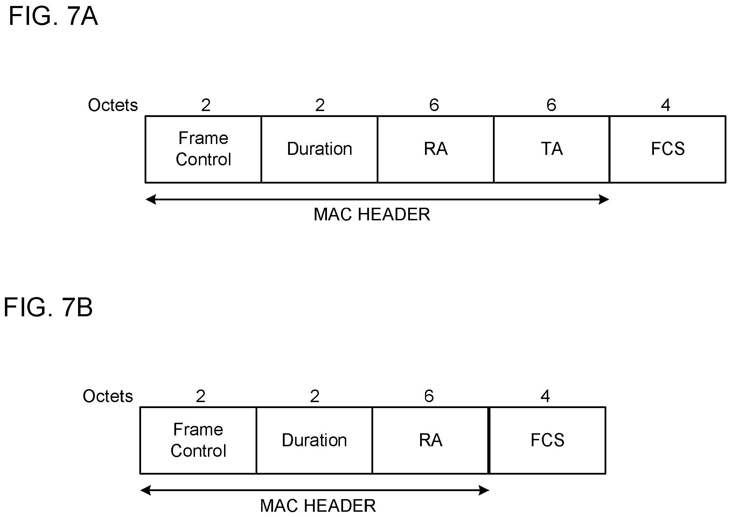

Formats (also referred to as, for example, signal formats or frame formats) of the RTS substitute signal and the RTS response signal according to the first aspect will be described with reference to Figs. 7A and 7B.

Fig. 7A illustrates one example of a format of an RTS (RTS format) that conforms to the other system (e.g., IEEE802.11). A Duration domain in Fig. 7A may indicate at least one of a time and a data amount (the number of octets) required for transmission of data.

Furthermore, a user terminal identifier (UE ID) may be stored in a domain (Receiver Address (RA) domain) in which a Medium Access Control (MAC) address of a reception side is stored. Furthermore, a cell identifier (cell ID) may be stored in a domain (Transmitter Address (TA) domain) in which an MAC address of a transmission side is stored. Furthermore, an RTS number may be stored in part of the RA domain or the TA domain.

The other RTS format may further include a domain that indicates an RTS, a domain that indicates at least one of a time and a data amount required for data transmission, a domain that specifies a receiver and a domain that specifies a sender. Furthermore, in a case where transmission of the RTS substitute signal is notified in advance, the other RTS format may further include a transmission start time (time window).

Furthermore, the other RTS format may be DCI that is transmitted on a downlink control channel (e.g., PDCCH: Physical Downlink Control Channel). For example, DCI (UL grant) for scheduling a PUSCH may be the above other RTS format. In this case, the user terminal may transmit the RTS response signal by using the PUSCH scheduled by the DCI.

Fig. 7B illustrates one example of a format of the RTS response signal (RTS response format) that conforms to the other system (e.g., IEEE802.11). In Fig. 7B, a Duration domain may indicate at least one of a time and a data amount (the number of octets) required for transmission of the data. A user terminal identifier (UE ID) may be stored in the RA domain in Fig. 7B. Furthermore, identification information of a sender (the radio base station in a case of transmission of the above-described downlink data) of the RTS substitute signal associated with the RTS response signal.

The user terminal may perform beam forming. The radio base station repeats transmission of a plurality of RTSs that respectively uses a plurality of transmission beams at a given periodicity. The number of times of repetition may be equal to or more than the number of reception beams that the user terminal can use.

### <Scheduling>

The user terminal transmits the RTS response signal by using one of (1) a PUSCH that is scheduled by a UL grant, (2) a PUSCH (a PUSCH that is configured by a higher layer signaling or a grant-free PUSCH) without scheduling using the UL grant, and (3) a PUCCH.

(1) When the PUSCH that is scheduled is used, the radio base station may transmit a UL grant for scheduling of a PUSCH of a licensed CC after transmission of the RTS substitute signal in the licensed CC (i.e., may schedule the PUSCH). In addition, the UL grant may be transmitted at the same time at which the RTS substitute signal is transmitted, may be transmitted after transmission of the RTS substitute signal, or may be transmitted before transmission of the RTS substitute signal by taking a processing speed of the user terminal into account.

When normally receiving the RTS substitute signal and detecting the idle state by carrier sensing, the user terminal transmits the RTS response signal by using the PUSCH that is scheduled by the above UL grant. In addition, the user terminal may start the above carrier sensing at a point of time of reception of the above UL grant, or after the RTS substitute signal is normally received. Thus, by controlling a transmission timing of the above UL grant, the radio base station can quickly receive the RTS response signal.

On the other hand, when (2) the PUSCH without scheduling or (3) the PUCCH is used, the radio base station may not transmit the above UL grant (scheduling is unnecessary).

### <Handling of RTS (RTS Substitute Signal) That is not Addressed to Own Terminal>

When detecting an RTS substitute signal (or an RTS) that is not addressed to the own terminal, the user terminal may ignore the RTS substitute signal and may not transmit an RTS response signal.

Alternatively, when detecting the RTS substitute signal that is not addressed to the own terminal and recognizing start of data transmission to another apparatus, the user terminal may stop transmission during a time indicated by a duration domain of the RTS substitute signal.

### <Application Control>

Whether or not to apply collision control during downlink data transmission according to the above first aspect based on a detection frequency of a busy state on a transmission side (radio base station) or a reception side (user terminal) may be controlled.

More specifically, in a case where (1) the detection frequency of the busy state during carrier sensing performed by the radio base station at a given periodicity is larger than a given threshold (or is the given threshold or more), the collision control during downlink data transmission according to the above first aspect may be applied.

On other hand, in a case where the above detection frequency is the given threshold or less (or is smaller than the given threshold), the user terminal may start downlink data transmission without transmitting the RTS substitute signal when detecting the idle state by LBT (listening or carrier sensing) before transmission.

Alternatively, in a case where (2) the detection frequency of the busy state during carrier sensing performed by the user terminal at the given periodicity is larger than the given threshold (or is the given threshold or more), the collision control during downlink data transmission according to the above first aspect may be applied. In this case, the user terminal may periodically report a carrier sensing result to the radio base station. The report may be performed by using the PUCCH or the PUSCH of the licensed CC.

As described above, when application control is performed based on the detection frequency of the busy state on the transmission side (radio base station) or the reception side (user terminal), it is possible to omit transmission of the RTS substitute signal and the RTS response signal in environment in which collision does not frequently occur, and improve frequency use efficiency and/or realize low latency transmission. Furthermore, when the application control is based on the detection frequency of the busy state on the reception side and when the degrees of congestion are different between the reception side and the transmission side, it is possible to more appropriately perform the application control.

### (Second Aspect)

The second aspect will describe collision control during uplink data transmission. In the second aspect, a reception apparatus is a radio base station (e.g., a gNB: gNode B, a Transmission/Reception Point (TRP) or a transmission point), and the transmission apparatus is a user terminal (e.g., UE: User Equipment).

In the second aspect, it suffices to switch the transmission apparatus and the reception apparatus according to the first aspect, and apply the first aspect to the collision control of an uplink data apparatus. More specifically, in the second aspect, it suffices to read a "radio base station" according to the first aspect as the "user terminal", read a "user terminal" according to the first aspect as the "radio base station", and read "downlink data" as "uplink data".

Furthermore, in the second aspect, the radio base station may transmit an above RTS response signal (see Fig. 5) by using a downlink control channel (e.g., PDCCH) or a downlink shared channel (e.g., PDSCH). The user terminal may transmit the above RTS response signal (Fig. 5) by using an uplink control channel (e.g., PUCCH) or a downlink shared channel (e.g., PDSCH).

### (Radio Communication System)

The configuration of the radio communication system according to the present embodiment will be described below. This radio communication system is applied the radio communication method according to each of the above aspects. In addition, the radio communication method according to each of the above aspects may be applied alone or may be applied in combination.

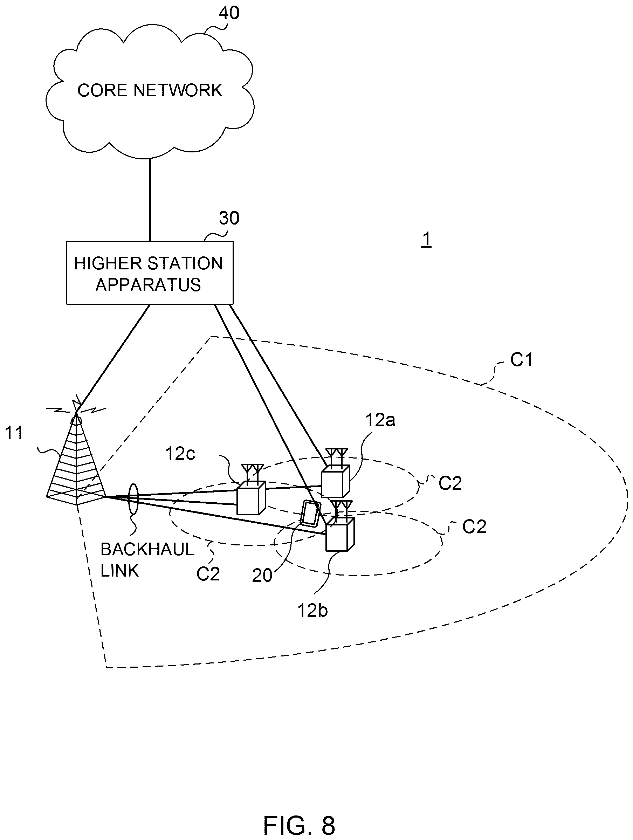

Fig. 8 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system. In this regard, the radio communication system 1 may be referred to as SUPER 3G, LTE-Advanced (LTE-A), IMT-Advanced, 4G, 5G, Future Radio Access (FRA) or New Rat (NR).

The radio communication system 1 illustrated in Fig. 8 includes a radio base station 11 that forms a macro cell C1, and radio base stations 12a to 12c that are located in the macro cell C1 and form small cells C2 narrower than the macro cell C1. Furthermore, a user terminal 20 is located in the macro cell C1 and each small cell C2. Different numerologies may be configured to be applied between cells. In this regard, the numerology refers to a communication parameter set that characterizes a signal design of a certain RAT or an RAT design.

The user terminal 20 can connect with both of the radio base station 11 and the radio base stations 12. The user terminal 20 is assumed to concurrently use the macro cell C1 and the small cells C2 that use different frequencies by CA or DC. Furthermore, the user terminal 20 can apply CA or DC by using a plurality of cells (CCs) (e.g., two CCs or more). Furthermore, the user terminal can use licensed band CCs and unlicensed band CCs as a plurality of cells. In addition, one of a plurality of cells can be configured to include a TDD carrier to which a reduced TTI is applied.

The user terminal 20 and the radio base station 11 can communicate by using a carrier (referred to as a Legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz, 5 GHz or 30 to 70 GHz) or may use the same carrier as that used between the user terminal 20 and the radio base station 11. In this regard, a configuration of the frequency band used by each radio base station is not limited to this.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal but also a fixed communication terminal.

The radio communication system 1 can apply Orthogonal Frequency-Division Multiple Access (OFDMA) to Downlink (DL) and can apply Single Carrier-Frequency Division Multiple Access (SC-FDMA) to Uplink (UL) as radio access schemes. OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and OFDMA may be used on UL.

The radio communication system 1 uses a downlink data channel (also referred to as, for example, a PDSCH: Physical Downlink Shared Channel or a downlink shared channel) shared by each user terminal 20, a broadcast channel (PBCH: Physical Broadcast Channel) and an L1/L2 control channel as DL channels. User data, higher layer control information and a System Information Block (SIB) are conveyed on the PDSCH. Furthermore, a Master Information Block (MIB) is conveyed on the PBCH.

The L1/L2 control channel includes a downlink control channel (a Physical Downlink Control Channel (PDCCH) or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and the PUSCH is conveyed on the PDCCH. The number of OFDM symbols used for the PDCCH is conveyed on the PCFICH. Transmission acknowledgement information (ACK/NACK) of an HARQ for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink data channel (also referred to as, for example, a PUSCH: Physical Uplink Shared Channel or an uplink shared channel) shared by each user terminal 20, an uplink control channel (PUCCH: Physical Uplink Control Channel), and a random access channel (PRACH: Physical Random Access Channel) as UL channels. User data and higher layer control information are conveyed on the PUSCH. Uplink Control Information (UCI) including at least one of transmission acknowledgement information (ACK/NACK) and radio quality information (CQI) is conveyed on the PUSCH or the PUCCH. A random access preamble for establishing connection with a cell is conveyed on the PRACH.

### <Radio Base Station>

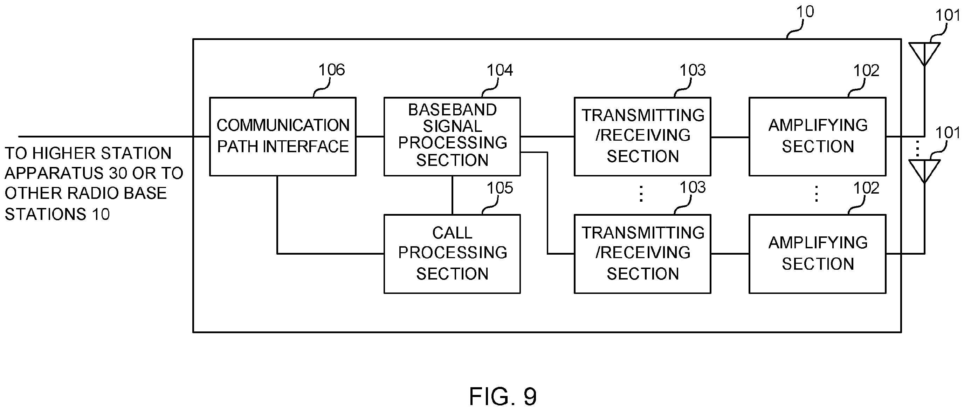

Fig. 9 is a diagram illustrating one example of an overall configuration of the radio base station according to the present embodiment. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103. The radio base station 10 is a transmission apparatus of downlink data and a reception apparatus of uplink data.

Downlink data transmitted from the radio base station 10 to the user terminal 20 is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the downlink data, and transfers the downlink data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency range, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the channel interface 106. The call processing section 105 performs call processing such as a configuration and release of a communication channel, state management of the radio base station 10 and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmission/reception section 103 transmits a downlink signal (e.g., a downlink control signal (downlink control channel), a downlink data signal (a downlink data channel or a downlink shared channel), a downlink reference signal (a DM-RS or a CSI-RS), a discovery signal, a synchronization signal or a broadcast signal), and receives an uplink signal (e.g., an uplink control signal (uplink control channel), an uplink data signal (an uplink data channel or an uplink shared channel) or an uplink reference signal).

More specifically, each transmission/reception section 103 may transmit data in an unlicensed CC (first frequency band). Furthermore, each transmission/reception section 103 may transmit an RTS substitute signal (transmission request signal) in a licensed CC (second frequency band). Furthermore, each transmission/reception section 103 may receive an RTS response signal (a response signal for the transmission request signal) in the licensed CC (second frequency band).

Furthermore, each transmission/reception section 103 may receive data in the unlicensed CC (first frequency band). Furthermore, each transmission/reception section 103 may receive the RTS substitute signal in the licensed CC. Furthermore, when normally receiving the RTS substitute signal in the licensed CC and detecting an idle state by listening of the unlicensed CC, each transmission/reception section 103 may transmit the RTS response signal in the licensed CC (second frequency band).

The transmission sections and the reception sections according to the present invention are composed of the transmission/reception sections 103 and/or the channel interface 106.

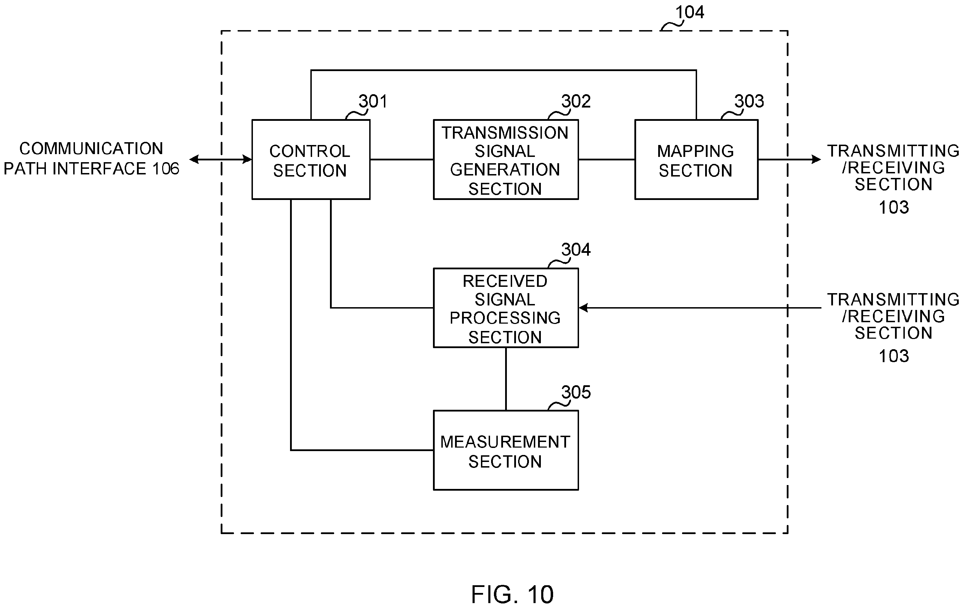

Fig. 10 is a diagram illustrating one example of a function configuration of the radio base station according to the present embodiment. In addition, Fig. 10 mainly illustrates function blocks of characteristic portions according to the present embodiment, and assumes that the radio base station 10 includes other function blocks, too, that are necessary for radio communication. As illustrated in Fig. 10, the baseband signal processing section 104 includes at least a control section 301, a transmission signal generating section 302, a mapping section 303, a received signal processing section 304 and a measurement section 305.

The control section 301 controls the entire radio base station 10. The control section 301 can be composed of a controller, a control circuit or a control apparatus described based on the common knowledge in the technical field according to the present invention.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of the downlink signal and/or the uplink signal. More specifically, the control section 301 controls the transmission signal generating section 302, the mapping section 303 and each transmission/reception section 103 to generate and transmit DCI (a DL assignment or a DL grant) including scheduling information of a downlink data channel and DCI (UL grant) including scheduling information of an uplink data channel.

Furthermore, the control section 301 may control transmission and/or reception of data in the unlicensed CC. Furthermore, the control section 301 may control transmission and/or reception of the RTS substitute signal in the licensed CC (Fig. 5). Furthermore, the control section 301 may control transmission and/or reception of the RTS response signal in the licensed CC (Fig. 5).

Furthermore, the control section 301 may control whether or not to transmit the RTS substitute signal and/or the RTS response signal based on a detection frequency of a busy state during listening performed by the transmission apparatus or the reception apparatus.

Furthermore, the control section 301 may control listening in the unlicensed CC. When normally receiving the RTS substitute signal in the licensed CC and detecting the idle state during listening of the unlicensed CC, the control section 301 may control transmission of the RTS response signal in the licensed CC (Fig. 5). Furthermore, by defining in advance a time from transmission of scheduling information or the RTS substitute signal to transmission of the RTS response signal, the control section 301 may grasp a reception completion timing of the RTS response signal in advance, and start an LBT operation in advance such that it is possible to start transmitting data at this reception completion timing (Fig. 6). The RTS response signal may include a number for identifying the RTS substitute signal or a number of a channel that is associated with the RTS substitute signal in advance.

The transmission signal generating section 302 generates a downlink signal (such as a downlink control channel, a downlink data channel or a downlink reference signal such as a DM-RS) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present invention.

The mapping section 303 maps the downlink signal generated by the transmission signal generating section 302, on given radio resources based on the instruction from the control section 301, and outputs the downlink signal to each transmission/reception section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a received signal input from each transmission/reception section 103. In this regard, the received signal is, for example, an uplink signal (such as an uplink control channel, an uplink data channel or an uplink reference signal) transmitted from the user terminal 20. The received signal processing section 304 can be composed of a signal processor, a signal processing circuit or a signal processing apparatus described based on the common knowledge in the technical field according to the present invention.

The received signal processing section 304 outputs information decoded by the reception processing to the control section 301. For example, the received signal processing section 304 outputs at least one of a preamble, control information and UL data to the control section 301. Furthermore, the received signal processing section 304 outputs the received signal and the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present invention.

The measurement section 305 may measure, for example, received power (e.g., Reference Signal Received Power (RSRP)), received quality (e.g., Reference Signal Received Quality (RSRQ)) or a channel state of the received signal. The measurement section 305 may output a measurement result to the control section 301.

### <User Terminal>

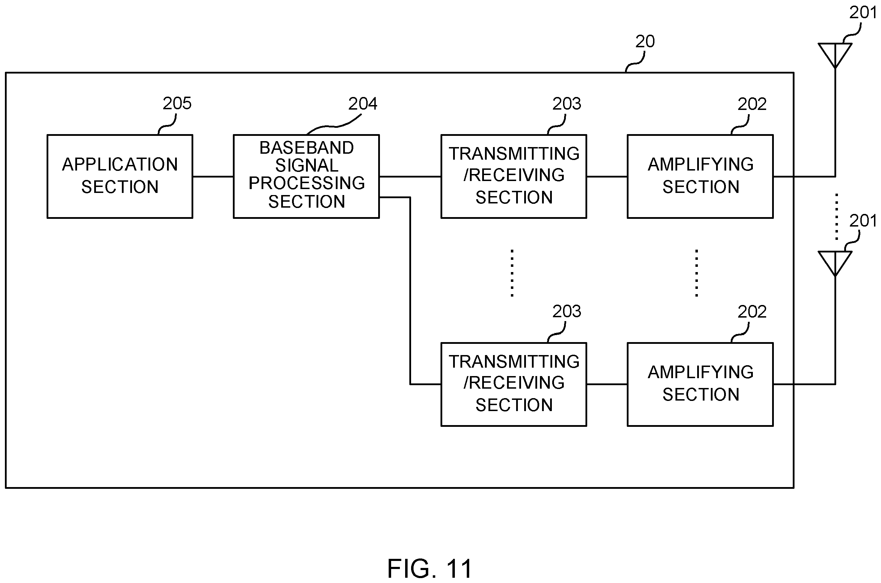

Fig. 11 is a diagram illustrating one example of an overall configuration of the user terminal according to the present embodiment. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203. The user terminal 20 may be a reception apparatus of downlink data and a transmission apparatus of uplink data.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present invention. In this regard, the transmission/reception sections 203 may be composed as an integrated transmission/reception section or may be composed of transmission sections and reception sections.

The baseband signal processing section 204 performs FFT processing, error correcting decoding and retransmission control reception processing on the input baseband signal. The baseband signal processing section 204 transfers downlink data to the application section 205. The application section 205 performs processing related to layers higher than a physical layer and an MAC layer. Furthermore, the baseband signal processing section 204 may transfer system information and higher layer control information of the downlink data, too, to the application section 205.

On the other hand, the application section 205 inputs UL data to the baseband signal processing section 204. The baseband signal processing section 204 performs retransmission control transmission processing (e.g., HARQ transmission processing), channel coding, precoding, Discrete Fourier Transform (DFT) processing and IFFT processing on the UL data, and transfers the UL data to each transmission/reception section 203. Each transmission/reception section 203 converts the baseband signal output from the baseband signal processing section 204 into a radio frequency range, and transmits a radio frequency signal. The radio frequency signal subjected to the frequency conversion by each transmission/reception section 203 is amplified by each amplifying section 202, and is transmitted from each transmission/reception antenna 201.

In addition, each transmission/reception section 203 receives the downlink signal (e.g., the downlink control signal (downlink control channel), the downlink data signal (the downlink data channel or the downlink shared channel), the downlink reference signal (the DM-RS or the CSI-RS), the discovery signal, the synchronization signal or the broadcast signal), and transmits the uplink signal (e.g., the uplink control signal (uplink control channel), the uplink data signal (the uplink data channel or the uplink shared channel) or the uplink reference signal).

More specifically, each transmission/reception section 203 may transmit the data in the unlicensed CC (first frequency band). Furthermore, each transmission/reception section 203 may transmit the RTS substitute signal (transmission request signal) in the licensed CC (second frequency band). Furthermore, each transmission/reception section 203 may receive the RTS response signal (the response signal for the transmission request signal) in the licensed CC (second frequency band).

Furthermore, each transmission/reception section 203 may receive the data in the unlicensed CC (first frequency band). Furthermore, each transmission/reception section 203 may receive the RTS substitute signal in the licensed CC. Furthermore, when normally receiving the RTS substitute signal during listening of the unlicensed CC and detecting the idle state by listening of the unlicensed CC, each transmission/reception section 203 may transmit the RTS response signal in the licensed CC (second frequency band).

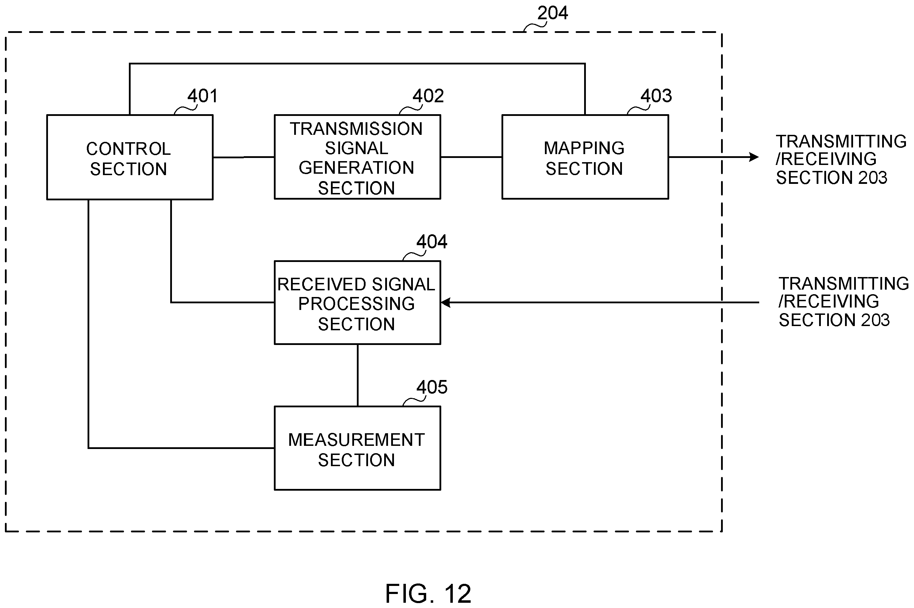

Fig. 12 is a diagram illustrating one example of a function configuration of the user terminal according to the present embodiment. In addition, Fig. 12 mainly illustrates function blocks of characteristic portions according to the present embodiment, and assumes that the user terminal 20 includes other function blocks, too, that are necessary for radio communication. As illustrated in Fig. 12, the baseband signal processing section 204 of the user terminal 20 includes at least a control section 401, a transmission signal generating section 402, a mapping section 403, a received signal processing section 404 and a measurement section 405.

The control section 401 controls the entire user terminal 20. The control section 401 can be composed of a controller, a control circuit or a control apparatus described based on the common knowledge in the technical field according to the present invention.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

Furthermore, the control section 401 may control transmission and/or reception of the data in the unlicensed CC. Furthermore, the control section 401 may control transmission and/or reception of the RTS substitute signal in the licensed CC (Fig. 5). Furthermore, the control section 401 may control transmission and/or reception of the RTS response signal in the licensed CC (Fig. 5).

Furthermore, the control section 401 may control whether or not to transmit the RTS substitute signal and/or the RTS response signal based on the detection frequency of the busy state during listening performed by the transmission apparatus or the reception apparatus.

Furthermore, the control section 401 may control listening in the unlicensed CC. When normally receiving the RTS substitute signal during listening of the unlicensed CC and detecting the idle state by listening in the unlicensed CC, the control section 401 may control transmission of the RTS response signal in the licensed CC (Fig. 5). The RTS response signal may include the number for identifying the RTS substitute signal or the number of the channel that is associated with the RTS substitute signal in advance (Fig. 6).

The transmission signal generating section 402 generates an uplink signal (such as an uplink control channel, an uplink data channel or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present invention.

The transmission signal generating section 402 generates an uplink data channel based on the instruction from the control section 401. When, for example, the downlink control channel notified from the radio base station 10 includes a UL grant, the transmission signal generating section 402 is instructed by the control section 401 to generate an uplink data channel.

The mapping section 403 maps the uplink signal generated by the transmission signal generating section 402, on radio resources based on the instruction from the control section 401, and outputs the uplink signal to each transmission/reception section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the received signal input from each transmission/reception section 203. In this regard, the received signal is, for example, a downlink signal (such as a downlink control channel, a downlink data channel or a downlink reference signal) transmitted from the radio base station 10. The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The received signal processing section 404 blind-decodes the downlink control channel for scheduling transmission and/or reception of the downlink data channel based on an instruction of the control section 401, and performs reception processing on the downlink data channel based on the DCI. Furthermore, the received signal processing section 404 estimates a channel gain based on the DM-RS or the CRS, and demodulates the downlink data channel based on the estimated channel gain.

The received signal processing section 404 outputs information decoded by the reception processing to the control section 401. The received signal processing section 404 outputs, for example, broadcast information, system information, an RRC signaling and DCI to the control section 401. The received signal processing section 404 may output a data decoding result to the control section 401. Furthermore, the received signal processing section 404 outputs the received signal or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present invention.

The measurement section 405 may measure, for example, received power (e.g., RSRP), DL received quality (e.g., RSRQ) or a channel state of the received signal. The measurement section 405 may output a measurement result to the control section 401.

### <Hardware Configuration>

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

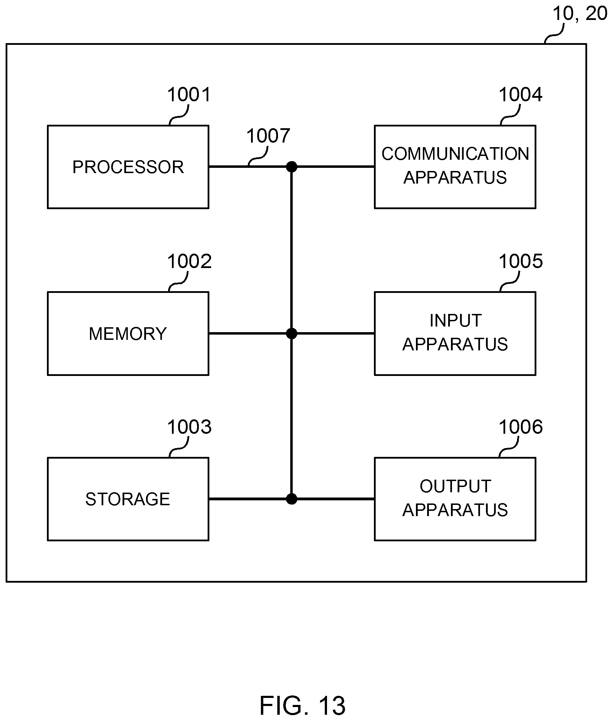

For example, the radio base station and the user terminal according to the one embodiment of the present invention may function as computers that perform processing of the radio communication method according to the present invention. Fig. 13 is a diagram illustrating one example of the hardware configurations of the radio base station and the user terminal according to the one embodiment of the present invention. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 13 or may be configured without including part of the apparatuses.

For example, Fig. 13 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspects/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description can be interchangeably used.

In this description, the terms "Base Station (BS)", "radio base station", "eNB", "gNB", "cell", "sector", "cell group", "carrier" and "component carrier" can be interchangeably used. The base station will be also referred to as a term such as a fixed station, a NodeB, an eNodeB (eNB), an access point, a transmission point, a reception point, a transmission/reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of the base station and/or the base station subsystem that provide a communication service in this coverage.

In this description, the terms "Mobile Station (MS)", "user terminal", "user apparatus (UE: User Equipment)" and "terminal" can be interchangeably used.

The mobile station will be also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

The base station and/or the mobile station may be referred to as a transmission apparatus and a reception apparatus.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the embodiment described in this description. The present invention can be carried out as modified and changed aspects without departing from the gist and the scope of the present invention defined based on the recitation of the claims. Accordingly, the disclosure of this description is intended for exemplary explanation, and does not bring any restrictive meaning to the present invention.

## Claims

1. A transmission apparatus comprising:
a transmission section that transmits a transmission request signal for requesting transmission of data in a second frequency band different from a first frequency band prior to transmission of the data in the first frequency band;
a reception section that receives a response signal for the transmission request signal; and
a control section that controls the transmission of the data based on the response signal.

2. The transmission apparatus according to claim 1, wherein the reception section receives the response signal in the second frequency band.

3. The transmission apparatus according to claim 1 or 2, wherein the transmission section transmits at least one of information for specifying the second frequency band and information for specifying a transmission destination of the data.

4. The transmission apparatus according to any one of claims 1 to 3, wherein the transmission section transmits the transmission request signal on a downlink shared channel, a broadcast channel or an uplink shared channel.

5. The transmission apparatus according to any one of claims 1 to 3, wherein the transmission section transmits a transmission timing of the transmission request signal by a higher layer signaling or downlink control information prior to the transmission of the transmission request signal.

6. A reception apparatus comprising:
a reception section that receives a transmission request signal for requesting transmission of data in a second frequency band different from a first frequency band prior to transmission of the data in the first frequency band; and
a transmission section that, when the transmission request signal is normally received in the second frequency band and an idle state is detected during listening of the first frequency band, transmits a response signal for the transmission request signal in the second frequency band.
